Europäisches Patentamt

(19) European Patent Office

Office européen des brevets

(11) Publication number: **0 157 971**
**A1**

## (12) EUROPEAN PATENT APPLICATION

(21) Application number: 84302392.0

(22) Date of filing: 06.04.84

(51) Int. Cl.⁴: **F 16 L 19/08**
**F 16 L 19/06, F 16 L 47/00**

(43) Date of publication of application
16.10.85 Bulletin 85/42

(84) Designated Contracting States:
AT BE CH DE FR GB IT LI LU NL SE

(71) Applicant Tiberio. John
Suite 3E- 1011 6th Avenue South West
Calgary Alberta T2P OW1(CA)

(72) Inventor: Tiberio, John
Suite 3E- 1011- 6th Avenue South West
Calgary Alberta T2P OW1(CA)

(74) Representative: Valentine, Francis Anthony Brinsley
REDDIE & GROSE 16 Theobalds Road
London WC1X 8PL(GB)

(54) Pipe line coupling.

(57) For connecting ends of pipe sections (13, 14), sleeves (11, 12) having serrated inner surfaces (20) are force fit onto the ends of pipe sections (13, 14) The sleeves (11, 12) are positioned within a tubular connector (10) having oppositely wound helical grooves (22, 32), with helical grooves (29, 30) in the sleeves (11, 12) adjacent thereto. Wires (23 and 31) are fed through slots (100, 105) in the connector (10) into the chambers formed by the adjacent helical grooves. The Connector (100) is rotated causing the wires to be drawn into the chambers to create a screw and nut effect thus causing the sleeves (11, 12) to be drawn inwardly until frusto-conical surfaces (34, 36) thereon mate with corresponding surfaces (33, 35) on the connector 10 to form a firm connection.

FIG. I

Croydon Printing Company Ltd

EP 0 157 971 A1

-1-

## PIPE LINE COUPLING

This relates to devices for connecting pipe sections, without the use of welding, particularly for use in the oil and gas industry.

Present pipeline construction techniques entail use of welding to join abutting ends of pipe sections. The use of welding for this purpose is relatively time consuming and requires the use of skilled labour which is expensive and sometimes difficult to obtain.

The present invention is adapted to provide a coupling device which is of such size and configuration as to permit a permanent connection of the ends of pipe sections, without the necessity of welding and at the same time to provide an uninterrupted continuous surface on the inside of the pipeline at the attachment area.

In accordance with the present invention there is provided a device for joining pipe sections comprising a generally tubular sleeve means having a plurality of ridges situated thereon said ridges being adapted to be forced into contact with an adjacent pipe section to resist withdrawal of said pipe section from said sleeve means, a frusto-conical surface at one end of said sleeve means, said surface being inclined at a shallow angle to the axis of said sleeve means and being adapted for engagement with a mating surface on a second element of said device.

In accordance with the present invention there is also provided a device for joining pipe sections to provide

- 2 - 0157971

a substantially uninterrupted internal cross-section in the area of joinder of the pipe sections, comprising a generally tubular sleeve means having a plurality of sharp ridges situated thereon, said ridges being adapted to be forced into contact with a pipe coupled to a first end thereof to resist withdrawal of said pipe from said sleeve means, a frusto-conical surface at a second end of said sleeve means, said surface being inclined at an angle of between 5° and 10° to the axis of said sleeve means and being adapted for engagement with a mating surface on a second element of said device, means on said sleeve means for urging said sleeve means in a direction toward said second element.

In drawings which illustrate embodiments of the invention:.

Figure 1 is an illustration partially in cross-section, of a first embodiment of a pipe section connecting device, in an assembled state.

Figure 1a is an illustration of certain of the components of the embodiment of Figure 1 in an unassembled state.

Figure 2 is an illustration partially in cross-section, of a further embodiment of a pipe section connecting device, in an assembled state.

Figure 3 is an illustration partially in cross-section, of a further embodiment of a pipe section connecting device, in an assembled state.

Figure 3a is an illustration of an alternative embodiment of the device illustrated in Figure 3.

Figure 4 is an illustration partially in cross-section, of a further embodiment of a pipe section connecting device, in an assembled state.

Figure 5 is an illustration partially in cross-section, of a further embodiment of a pipe section connecting device, in an assembled state.

Figure 6 is an illustration partially in cross-section, of a connecting sleeve in accordance with the invention.

- 3 -                                    0157971

Figure 7 is an illustration partially in cross-section, of a further embodiment of a connecting sleeve in accordance with the invention.

Figure 8 is an illustration partially in cross-section, of a further embodiment of a connecting sleeve in accordance with the invention.

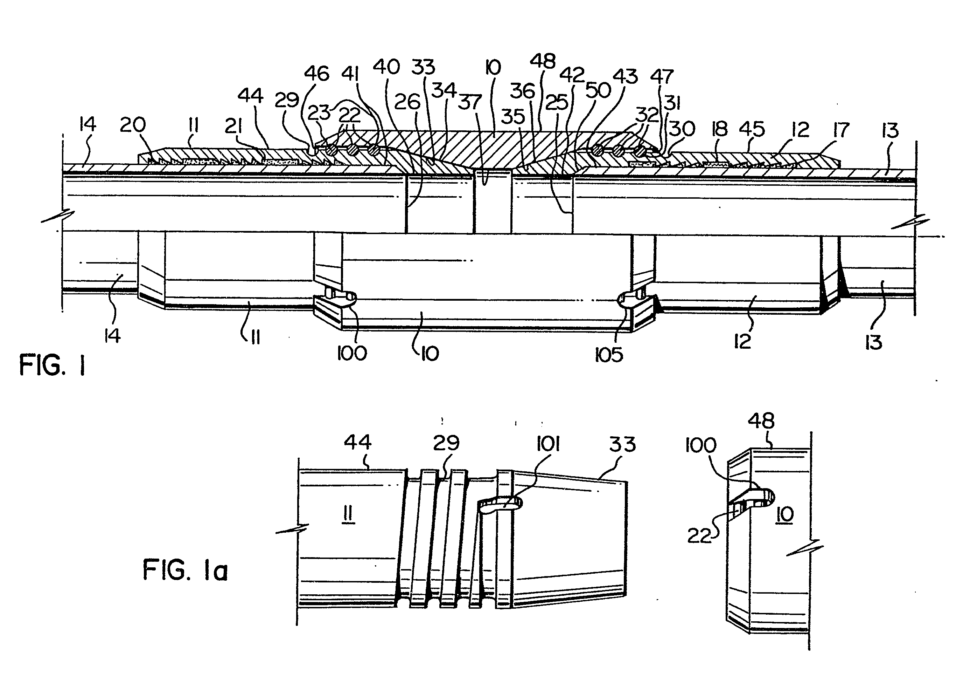

Referring now to Figure 1, there is shown a first embodiment of the invention in an assembled form, connecting the ends of pipe sections 13 and 14. The apparatus comprises sleeves 11 and 12 and connector 10. Sleeve 11 is generally tubular in shape and has an inner cylindrical surface 40 of a first diameter and an inner cylindrical surface 41 of somewhat larger diameter than that of the surface 40. Surface 40 includes serrations 20 therein consisting of circumferential ridges for gripping the outer surface of an adjacent pipe section. The ridges may be formed by machining threads having a generally regular triangular cross-section. Preferably, however, the cross-sectional shape of the ridges is that of an irregular triangle wherein the side of the triangle nearest the centre of the sleeve is shorter than the side of the triangle nearer the end of the sleeve. This shape results in an inclination to the ridges which serves to provide less resistance to inward movement of the pipe relative to the sleeve, and at the same time to resist a tendency to withdrawal of the pipe by biting into the surface thereof in response to a force tending to pull the pipe outwardly. Surface 40 also includes spaced recesses 21 which are adapted to serve as reservoirs for holding epoxy resin used in mounting the sleeves on the pipe sections.

The outer surface 44 of the sleeve 11 includes a continuous helical groove 29 extending around the circumference thereof. The end of the sleeve 11 adjacent the slot 29 includes a surface 33 which is inclined to the longitudinal axis of the sleeve at a shallow angle thus forming a frusto-conical surface 33.

The second sleeve 12 is identical to the sleeve 11

- 4 -

as described above except that its helical groove 30 is of 0157971 hand to the groove 29.

The connector 10 includes an outer cylindrical surface 48 and inner cylindrical surfaces 46 and 47 situated at the ends thereof. The diameter of the surfaces 46 and 47 is slightly greater than the diameter of the surfaces 45 and 44 of sleeves 12 and 11 thereby permitting the connector to be rotated relative to the sleeves.

The connector also includes a central inner cylindrical surface 37, the diameter of which substantially, corresponds to the inner diameter of the pipe sections 13 and 14. Between the central cylindrical surface 37 and the cylindrical surface 47, there is a frusto-conical surface 36 which is congruent to and adapted to mate with, surface 35 on sleeve 12. Similarly frusto-conical surface 34 on the other side of the central cylindrical surface 37 is congruent to and adapted to mate with, surface 33 on sleeve 11.

On the surface 47 of the connector 10 there is situated a continuous helical groove 32 which corresponds to the groove 30 in the sleeve 12. Similarly surface 46 carries a continuous helical groove 22 which corresponds to the groove 29 in the sleeve 11.

Slots 100 and 105 are situated at the ends of the connector 10 and are preferably slightly tilted to the radius to facilitate feeding wires 23 and 31 into the helical grooves.

To assemble the pipe connector device the sleeves 11 and 12 are first mounted on the ends of the pipes 14 and 13. This step may be carried out either at the pipe manufacturing facility or in the field. Prior to mounting the sleeves, an epoxy resin mixture is spread in the recesses 21 and 17 and in the serrated portions 20 and 17 of the inner surface of the sleeves. The sleeves 11 and 12 are then pressed into place over the ends of the pipes 14 and 13 until the ends of the pipe sections contact abutment surfaces 49 and 50. The epoxy resin mixture serves as a lubricant to permit easier passage of the sleeves and when the sleeves are in place it serves to fix the sleeves to the pipe sections. The epoxy resin also serves to seal the connection against the ingress of moisture from the outside which would tend to cause corrosion in the connecting device and to seal the connection against the escape of fluids carried by the pipeline.

The end of wire 23 is bent at a right angle and the bent portion is positioned in slot 101 in sleeve 11 illustrated in Figure 1(a). Connector 10 is then slid over the end of the frusto-conical surface 33 with the slot 100 in the connector aligned with slot 101 in the sleeve until the sleeve can travel no further. At that point, the free end of the wire 23 emerges through the slot 100 and the end of the wire 23 will be anchored against displacement by the right angle bend in it situated in slot 101, upon a slight rotation of the connector.

The end of wire 31 is similarly bent at a right angle and placed in corresponding slot in the sleeve 12. The sleeve 12 is then pushed as far as it can go into the connector 10 with the corresponding slots in alignment and with the free end of the wire 31 emerging from the slot 105.

The connector 10 is then rotated so that wires 23 and 31 are drawn through the slots 100 and 105 on the ends of the connector 10 and are laid in the helical grooves 22 and 29 on one end and the helical grooves 32 and 30 on the other end. The wires 23 and 31 mate with the slots in the connector and sleeves in a screw and thread fashion and because the slots are oppositely threaded, rotation of the connector serves to draw both sleeves into the connector. As rotation of the connector 10 continues, frusto-conical surfaces 35 and 36 and 33 and 34 will eventually contact and lodge within one another to form a firm connection. Axial forces produced by the connector are transformed into substantial radial forces at the frusto-conical surfaces, which are inclined at a shallow angle to the axis. This creates a tendency to expand the element with the female frusto-conical surface and provides a tight connection between the elements through high contacting forces present over the relatively large area of the contacting frusto-conical surfaces.

With the rotation of the connector, the wires 23 and 31 are deformed to tightly fit the grooves within which they are situated thereby to prevent backing-off of the connector.

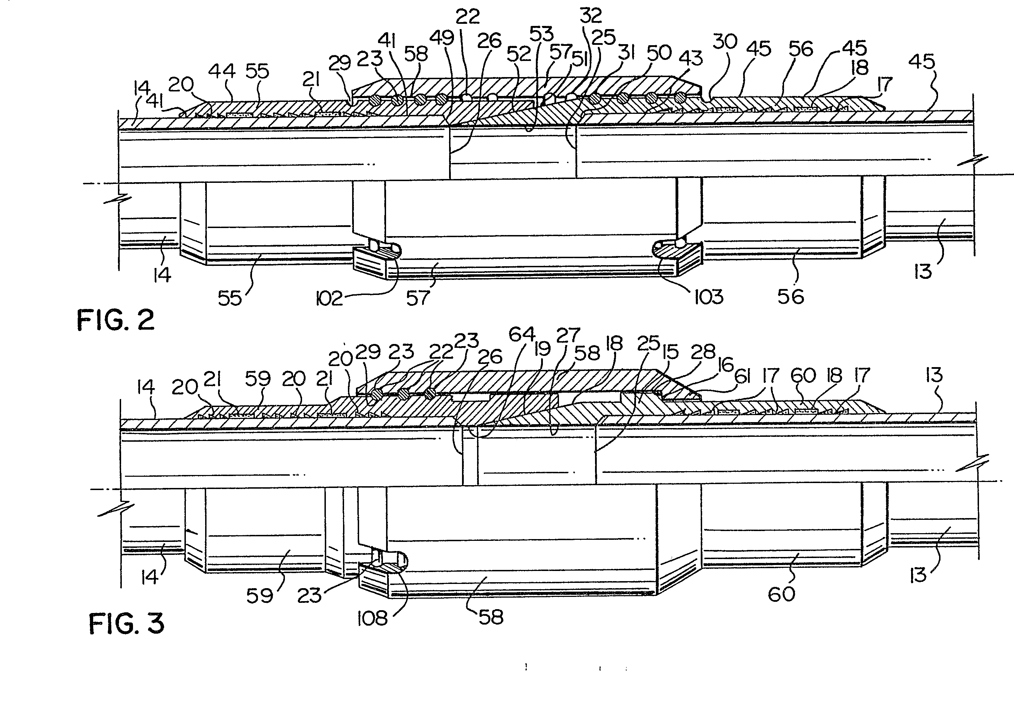

Referring now to the embodiment of the invention shown in Figure 2 the major portions of which comprise sleeves 55 and 56 and connector 57. Connector 57 is substantially tubular in shape and has helical grooves 22 and 32 winding in opposite directions, situated on the inner cylindrical surface 58 thereof.

Sleeve 56 includes circumferential serrations or ridges 17 and recesses 18 on its inner cylindrical surface 43. The outer cylindrical surface 45 includes helical grooves 30 which match grooves 32 on the connector 57. The end of the sleeve 56 adjacent the grooves 32 is inclined at a shallow angle to provide a frusto-conical outer surface 51 which is adapted to mate with a frusto-conical surface 52 on the sleeve 55. Inner liner cylindrical surface 53 of sleeve 56 is of substantially the same diameter as that of pipe 13. The diameter of the inner cylindrical surface 43 of the sleeve 56 is slightly less than the diameter of the outer surface of pipe section 13 to enable the sleeve 56 to be press fitted on the end of the pipe section 13. Sleeve 55 includes circumferential ridges 20 and recesses 21 on the inner surface 41. The upper surface 44 includes helical grooves 29 matching grooves 22 on the connector 57. The end of the sleeve 55 adjacent the helical groove 22 is inclined at a shallow angle relative to the longitudinal axis of the sleeve to provide a frusto-conical inner surface 52 adapted to mate with a congruent surface 51 on the sleeve 56. The diameter of the inner cylindrical surface 41 of the sleeve 55 is slightly less than the outer diameter of the pipe 14 to enable the sleeve 55 to be press fitted on the end of the pipe.

The assembly procedure is similar to that used with the first embodiment. The sleeves 55 and 56 having a layer of epoxy resin mixture on the inner surfaces to provide lubrication and to assist subsequent bonding, are press fitted on to the ends of pipe sections 14 and 13. The connector 57 is then slid over sleeve 56 and the sleeves 56 and 57 are aligned and correctly spaced. A bent end of wire 23 is placed in a slot (not shown) on the outer surface of sleeve 55 and connector 57 is slid over the end of sleeve 55 with slot 102 on the end thereof in alignment with the slot on the sleeve 55 and wire 23 emerging therefrom. The connector 57 is then rotated until slot 103 coincides with the slot in the surface of sleeve 56. The bent end of wire 31 is placed in the slot in the sleeve 56 with the free end emerging from slot 103. The connector 57 is then rotated causing the wires 23 and 31 to be drawn into and laid down in the helical grooves in the connector and sleeves thereby acting as screws and threads. Because one acts as a left hand screw and thread and the other acts as a right hand screw and thread, rotation of the connector 57 will serve to draw both of the sleeves into the connector. Eventually the frusto conical surfaces 51 and 52 on the sleeves 56 and 55 will contact and firmly mate to form a strong bond. At the same time the wires 23 and 31 will tightly fit the helical grooves to produce a permanent connection and seal.

It will be appreciated that when the device is assembled with the pipe sections, the inner surfaces of the pipe sections 14 and 13 together with the surface 53 of the sleeve 56 will form a smooth substantially continuous surface which is uninterrupted by discontinuities in cross-section.

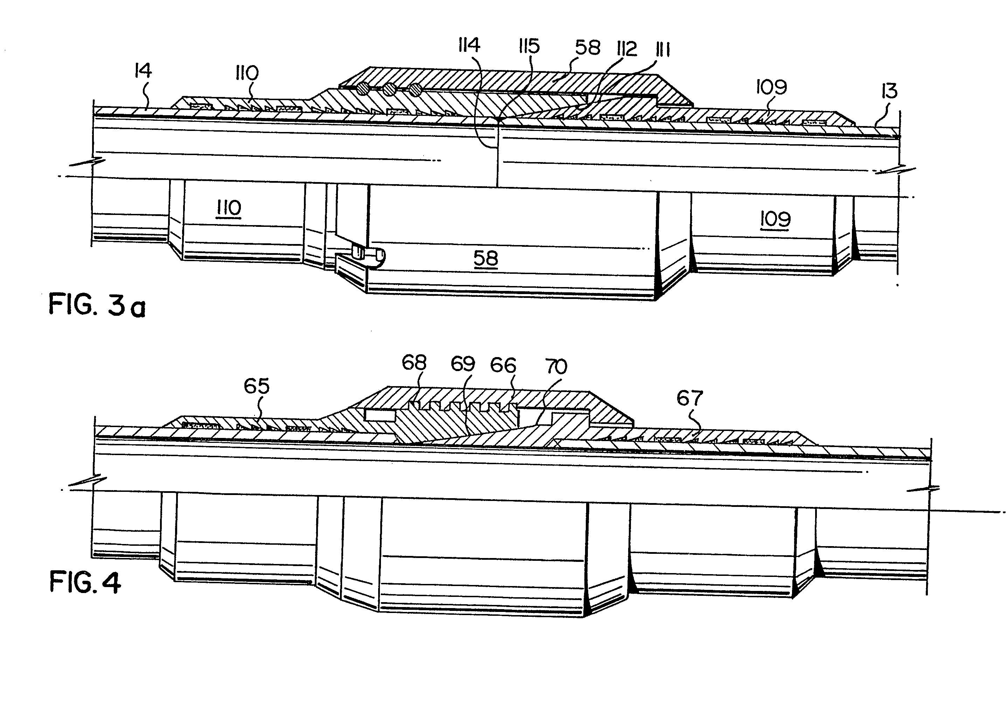

In the embodiment shown in Figure 3 the sleeve 60 includes an integral ring 15 on its outer surface. The connector 58 includes an inwardly projecting flange 61 having surface 16 adapted to rotatably bear on surface 28 of the ring 15. It will readily be appreciated that the connector coacts with the sleeve 60 by means of the contacting flange 61 and ring 15.

Connector 58 is slid to the right exposing frusto-conical surface 18. Sleeves 59 and 60 are axially aligned and brought together with female frusto-conical surface 19 on sleeve 59 contacting male frusto-conical surface 18 on sleeve 60. Connector 58 is slid to the left with slot 108 in alignment with the slot on the surface of the connector 59. The bent end of wire 23 is placed in the slot on the connector 59 with the free end emerging through slot 108. The connector 58 is then rotated causing wire 23 to be laid in slots 29 and 22 and creating a force tending to press the sleeves 59 and 60 together. An advantage of this embodiment which employs a single thread and a pair of coacting rings, is that it permits the connector to be slid back and the sleeves to be fully engaged before the connector is screwed into place to provide the engaging force on the sleeves.

As with the other embodiments a substantially continuous inner surface is provided by the inner walls of the pipe sections 14 and 13 the surface 64 of sleeve 59 and the surface 27 of sleeve 60 and a strong connection is formed by the mating frusto-conical surfaces.

Figure 4 discloses an embodiment which is substantially similar to Figure 3. Instead of using a wire situated in a helical groove as a thread, a thread 68 has been machined on the outer surface of the sleeve 65. The thread 68 is adapted to engage the connector 66 and to provide, upon rotation of the connector, the engaging force which causes frusto-conical surfaces 69 and 70 to mate and form a strong union.

The embodiment of Figure 4 is particularly suited for use where it is desired to be able to disconnect the pipe sections, since the use of the machined thread permits the connector to be disassembled and reassembled.

Figure 3a shows a further embodiment wherein the pipe ends abut one another at 114 thus permitting contact only between the pipeline and the contents thereof and avoiding any contact between the material of the sleeves and the contents of the pipeline. Such an arrangement is particularly suitable for avoiding corrosion, particularly where the pipeline is adapted to carry sour gases.

As will be seen from Figure 3a, the sleeves are fitted on the ends of the pipe sections so that the end of pipe section 14 upon assembly substantially coincides with the inner edge of frusto-conical surface 112 on sleeve 110 and the end of pipe section 13 upon assembly substantially coincides with the outer edge of frusto-conical surface 111 on sleeve 109.

The procedure for assembling the device will be essentially the same as described in relation to the embodiment of Figure 3. Upon assembly chamfered edges of the ends of the pipes 14 and 13 will form a V-shaped ring 115 containing epoxy resin to form a seal.

It will be appreciated that the embodiments of Figures 1, 2, 4 and 5 may similarly be constructed so that the ends of the pipe abut in order to avoid contact between the contents of the pipeline and the material carried by the pipe.

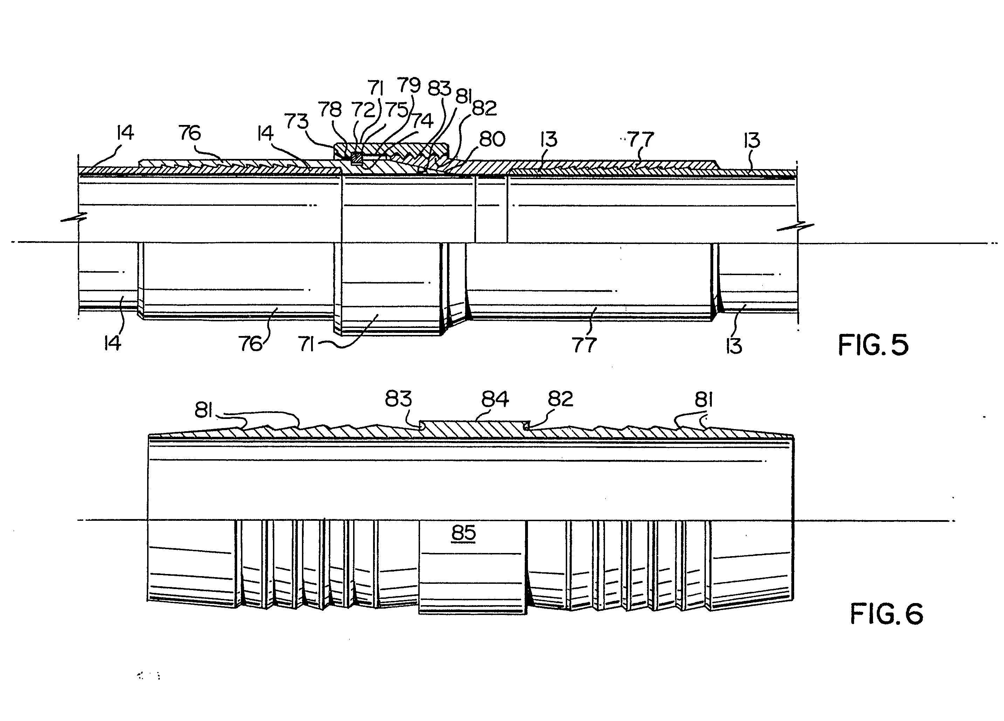

The embodiment shown in Figure 5 includes a locking ring 72 mounted in a circumferential slot 77 in the sleeve 76. The locking ring is composed of high tensile steel and has a gap therein which permits it to be elastically deformed to a required extent. After the sleeve 76 with the ring 72 mounted in slot 74 therein, is fitted on the end of pipe section 14, connector 71 is then mounted by inserting it over tapered end of the sleeve 76 and pressing it in the direction of the ring 72. Chamfered surface 73 on the forward end of connector 71 will contact chamfered surface 75 on the ring 72 and continued pressure on the connector will cause the ring 72 to be compressed thus permitting surface 78 on the connector 71 to ride over the ring 72. When the ring 72 reaches the area 79 of enlarged diameter it will spring back into its original shape thereby locking the connector 71 in the position shown in Figure 5. The ring is dimensioned to permit movement of the connector 71 relative to the sleeve 76.

To connect the pipe sections 13 and 14, to which sleeves 76 and 77 are attached, the pipes are axially aligned, and frusto-conical surfaces 80 and 81 are pressed into engagement. The connector 71 is then brought into contact so that the threaded surfaces 83 and 82 engage and the connector 71 is rotated to produce the engaging force on the melting frusto-conical surfaces.

In order to obtain optimum locking engagement of the mating contacting frusto-conical surfaces in the previously described embodiments, such surfaces should be inclined at a relatively shallow angle, preferably in the order of between 5 and 10 degrees to the central axis thereof.

The wire used as threads in the foregoing embodiments may comprise a high strength low carbon steel having a yield strength in the range of 60,000 to 80,000 psi.

Figure 6 illustrates a connector consisting of a single sleeve 85. Sleeve 85 is adapted to be attached to ends of adjacent pipe sections by force fitting the sleeve 85 into the inside of the ends of the pipe sections. The sleeve 85 includes circumferential serrations or sharp ridges 81 of gradually decreasing diameter toward the ends of the sleeve. The maximum diameters of the ridges are slightly greater than the inside diameter of the pipe sections to be joined. The sleeve 85 also includes a central portion 84 having maximum thickness and maximum outer diameter. The ends of the central position 84 include recesses 83 and 82 for receiving and holding the ends of the pipe sections therein.

To join pipe sections the ends of the sleeve are forced into place inside the pipe sections using a layer of epoxy resin as a lubricant and sealing means, until the ends of the pipe are positioned in and are lodged in recesses 82 and 83.

The embodiment illustrated in Figure 6 is adapted for use in a low pressure pipeline.

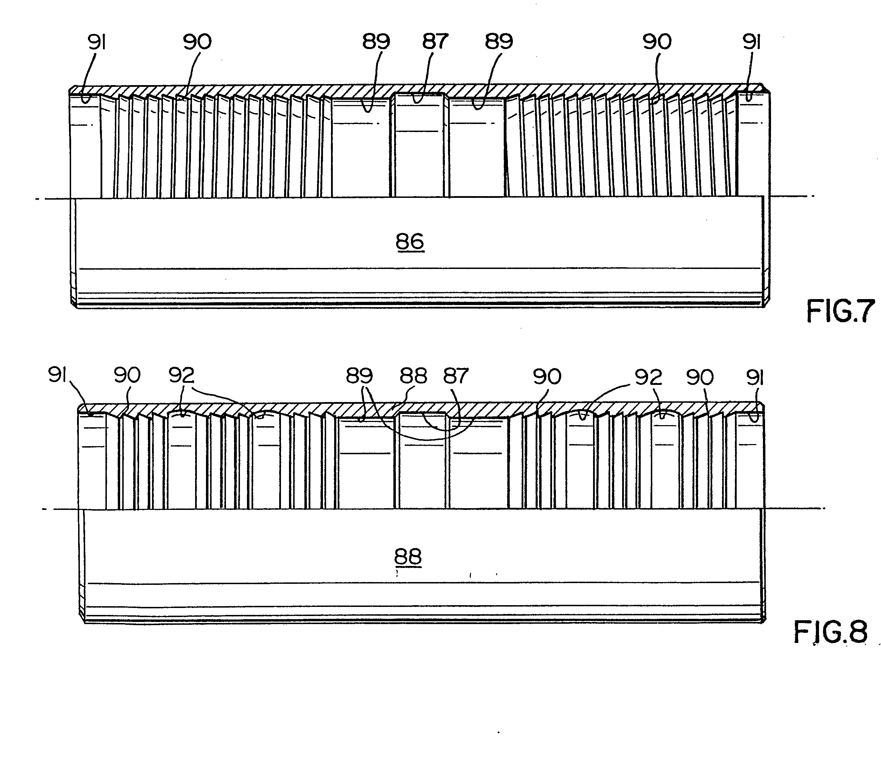

The connector illustrated in Figure 7 comprises a single sleeve 86 for force fitting over the ends of adjacent pipe sections, to join the pipe sections.

The connector 86 includes inner cylindrical surfaces 91 at each end having a diameter slightly greater than the outer diameter of the pipe sections to be joined. In the central region of the sleeve 86 there is a recess 87 the diameter of which is slightly greater than the outside diameter of the pipes. This recess is used as a reservoir for epoxy resin. On each side of recess 87 there is a cylindrical surface 89 having a diameter slightly less than the outside diameter of the pipes. Between surfaces 89 and surface 91 there are a series of circumferential sharp ridges or serrations 90 the maximum internal diameter of which is slightly less than the outer diameter of the pipe. As with the other embodiment the sharp edges of these ridges are directed somewhat toward the centre of the sleeve to facilitate entry of the pipe into the sleeve and to provide a biting action into the pipe to resist withdrawal of the pipe.

To join pipe sections, epoxy resin is spread in the areas of recess 87 and serrations 90 and the pipe ends are forced into the respective ends of the sleeve 86 until they abut at the centre of area 87.

Figure 8 illustrates an embodiment similar to that of Figure 7 but including recesses 92 in the area of serrations or ridges 90, which serve as epoxy resin reservoirs. This device is assembled in a similar manner to that described in relation to the embodiment illustrated in Figure 7.

CLAIMS:-

1.   A device for joining pipe sections comprising
a generally tubular sleeve means having a plurality of
ridges situated thereon, said ridges being adapted to
be forced into contact with an adjacent pipe section
to resist withdrawal of said pipe section from said
sleeve means, a frusto-conical surface at one end of
said sleeve means, said surface being inclined at a
shallow angle to the axis of said sleeve means and
being adapted for engagement with a mating surface on
a second element of said device.

2.   A device according to claim 1 characterised by
a second sleeve means adapted to be attached to an
end of a second pipe section, said second sleeve
having a frusto-conical surface thereon inclined at a
shallow angle to the axis of the second sleeve means
and adapted to engage with a mating surface on said
first sleeve means or an intermediate element of the
device.

3.   A device according to claim 2, characterised by
attachment means for drawing said sleeves to bring
said frusto-conical surfaces on said sleeves into
tight contact with mating frusto-conical surfaces on
each other or on the intermediate element.

4.   A device according to claim 3, characterised in
that the intermediate element is a connector and said
attachment means comprises a helical groove on at
least one end of said connector which when placed in
juxtaposition with a corresponding helical groove
on the corresponding sleeve means is adapted to form
a continuous helical chamber to receive a wire.

5.      A device according to claim 4, characterised
in that the connector has said helical grooves at
each end  and includes slots communicating with said
helical grooves therein for feeding wires into said
chambers, said helical slots in said connector being
of opposite hand whereby as said helical grooves in
said sleeves are positioned within the ends of said
connector and said wires are fed through said slots
into said chambers, the frusto-conical surfaces on
said sleeves will be drawn inwardly of said connector
and into contact with said frusto-conical surfaces on
said connector, upon rotation of said connector.

6.      A device according to any of the preceding
claims characterised in that a layer of epoxy resin
is used to assist in providing adherence between each
said pipe section and the sleeve means mounted thereon.

7.      A device according to any of the preceding
claims characterised in that ends of said pipe
sections are in abutting contact and epoxy resin is
used to assist in sealing said connection.

8.      A device according to claim 6 or 7, wherein
said sleeves include recesses in the area of said
ridges to provide reservoirs for epoxy resin.

9.      A device according to any of the preceding
claims characterised in that the or each said shallow
angle is in the range $5^{\circ}$ to $10^{\circ}$.

10.      A device for joining ends of pipe sections comprising a sleeve having an internal generally cylindrical surface, said sleeve including a plurality of sharp ridges on said inner surface, said ridges being angled towards the centre of said sleeve to assist entry of pipe sections and to resist withdrawal of pipe sections, said internal surface also including a plurality of recesses to provide reservoirs for epoxy resin.

11.      A device for joining ends of pipe sections comprising a sleeve having a plurality of sharp ridges on the outer surface adapted to contact the inner surface of pipe sections, said ridges having a gradually increasing diameter towards the center of the sleeve, said sleeve widening an area of increased diameter at the centre thereof having recesses therein to accomodate ends of pipe sections.

12.      A method of joining pipe ends comprising press fitting a sleeve having serrations on the inner surfaces thereof over a pipe end, locating a connector having a helical groove therein over a helical groove in the outer surface of the sleeve, feeding wire through a slot in the connector into a chamber formed by the grooves on the connector and sleeve, rotating the connector to cause the wire to be drawn into said chamber to produce a screw and thread effect causing the sleeve to be drawn inwardly of the connector and to be formed at a frusto-conical surface on said sleeve to form a tight connection.

FIG. 1

FIG. 1a

1/5

0157971

FIG. 2

FIG. 3

0157971

FIG. 3a

FIG. 4

FIG.5

FIG.6

0157971

FIG.7

FIG.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-2 507 261 (J. MERCIER) <br> * Column 2, lines 35-54; figures 1-5 * | 1,3,9 | F 16 L 19/08 <br> F 16 L 19/06 <br> F 16 L 47/00 |
| X | FR-A-2 023 341 (KYONI KIKO K.K.) <br> * Page 7, line 29 - page 8, line 16; figure 4 * | 1,3,9 | |
| X | BE-A- 434 601 (TUBE PATENT LTD.) <br> * Whole document * | 1,3,9 | |
| X | GB-A-1 011 610 (IMPERIAL-EASTMAN CORPORATION) <br> * Figures 1-4 * | 1,3,9 | |
| A | GB-A- 861 752 (MAICO-FAHRZEUGFABRIK) <br> * Figures 1-3 * | 1 | TECHNICAL FIELDS SEARCHED (Int. Cl.4) <br><br> F 16 L |
| A | EP-A-0 066 033 (ROLF MATTES) <br> * Figures 1-3 * | 1 | |
| A | US-A-3 427 047 (J.W. MAYO) <br> * Figures 2,3 * | 4,5 | |
| A | FR-A-2 013 480 (INDUSTRIEBEDARF-GESELLSCHAFT) <br> * Page 2, lines 2-9; figure 13 * | 6,7,10 | |

The present search report has been drawn up for all claims

| Place of search <br> THE HAGUE | Date of completion of the search <br> 25-10-1984 | Examiner <br> ANGIUS P. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82